# EUROPEAN PATENT SPECIFICATION

(11) **EP 2 440 171 B1**
(45) Date of publication and mention of the grant of the patent: **06.11.2013**
(21) Application number: 10750332.8
(22) Date of filing: 25.02.2010
(51) Int. Cl.: A61J 9/00, A61J 11/00, A61J 9/08, A61J 11/04

(54) **INFANT FEEDING APPARATUS**
VORRICHTUNG FÜR SÄUGLINGSERNÄHRUNG
DISPOSITIF DESTINÉ À ALIMENTER LES NOURRISSONS

(30) Priority: 10.03.2009 CN 200920135477 U; 22.07.2009 CN 200920306690 U; 04.11.2009 CN 200920314008 U
(43) Date of publication of application: 18.04.2012
(73) Proprietor: Dongguan Kidsme Trading Company Limited, Dongguan, Guangdong 523850 (CN)
(72) Inventor: LO, Fu Man Herman, Hong Kong (CN)
(74) Representative: Hocking, Adrian Niall
(86) International application number: PCT/CN2010/070745
(87) International publication number: WO 2010/102536

(56) References cited:
- CN-Y- 2 735 981
- GB-A- 1 245 291
- US-A- 2 426 927
- US-A- 3 610 248
- US-A- 4 192 307
- US-A- 4 623 069
- US-A- 5 395 392
- US-A- 6 110 193
- US-A1- 2003 018 359
- US-B1- 6 365 202

## Description

### CROSS-REFERENCE TO RELATED APPLICATIONS

This application claims priorities of Chinese Patent Application No 200920135477 5, filed on March 10, 2009, Chinese Patent Application No 200920306690 8, file on July 22, 2009, and Chinese Patent Application No 200920314008 X, file on November 4, 2009.

### FIELD OF PATENT APPLICATION

The present application relates to a feeding apparatus

### BACKGROUND

Milk bottles are used to contain liquid state food such as milk and beverage for feeding infants.

However, there is no suitable feeding apparatus to hold small pieces of cut fruit such as pear, apple and vegetable for feeding infants. There is a need to provide a feeding apparatus that can be used to feed infants with food such as fruit, jelly, yogurt, fish, meat, etc.

US2003/0018359 provides a fluid dispenser which is provided with a fluid containment unit and a support unit. The fluid containment unit includes a bulb, a nipple, and a tether connecting the bulb to the nipple. The tether prevents or limits relative rotation of the bulb and nipple, but causes an issue in that separation is prevented.

### SUMMARY

A feeding apparatus comprising:
a separate food container comprising an open end, a closed end, an annular flange at the open end, and a plurality of apertures at least adjacent to the closed end;
a first coupling member comprising an opening in communication with the container open end, the food container being engagable with the first coupling member; and
a second coupling member which is separate of the food container, and which is cooperable with the first coupling member to be movable between an open configuration allowing food to pass through the opening of the first coupling member and into the food container, and a sealed configuration where the second coupling member covers and closes the opening of the first coupling member thereby sealing the open end of the food container;
wherein the food container is made of a soft resilient material and is deformable between an original shape having a first volume and a deformed shape having a second volume, wherein food is forcible through the apertures when the food container is deformed by an external force, and when the external force is removed, the food container returns to its original shape; characterised by
a position fixing mechanism having a notch at one of the edge of the annular flange of the food container and the first coupling member, and a projection at the other of the edge of the annular flange of the food container and the first coupling member, the notch and projection fixing a position of the separate food container when the annular flange is clamped between the annular platform of the first coupling member and the second coupling member.

In one embodiment, the soft resilient material is silicone, latex or rubber suitable for use with foodstuff.

In one embodiment, a protrusion is formed around each aperture on an outer surface of the food container.

In one embodiment, the outer surface of the protrusion is generally in the shape of a truncated dome.

In one embodiment, the feeding apparatus further includes at least one fastening mechanism for fastening the first and second coupling members together while in the sealed configuration.

In one embodiment, the first and second coupling members are fastened together by screw threads or fasteners.

In one embodiment, the first and second coupling members are hingedly connected together at one side and fastened together at the other side.

In one embodiment, the first and second coupling members are fastened together at two sides thereof by two fasteners respectively.

In one embodiment, the open end of the food container, the outer surfaces of the first and second coupling members are generally circular in shape.

In one embodiment, the food container is generally in the shape of a nipple of a milk-feeding bottle.

In one embodiment, the shape of the closed end of the food container generally conforms to the shape of the mouth of an infant.

In one embodiment, the feeding apparatus further includes a cap for covering the food container.

In one embodiment, the annular flange is adapted to be clamped between an annular platform of the first coupling member and the second coupling member while in the sealed configuration.

In one embodiment, the position of the annular flange relative to the annular platform fixed by the position-fixing mechanism is such that a person's hand is substantially horizontal when the food container is in the person's mouth.

In one embodiment, the notch of the position-fixing mechanism is formed on the annular flange and the corresponding projection is formed on the annular platform.

In one embodiment, a handle assembly is provided comprising a handle core, a handle pad and a handle sleeve, the handle core being connected to the second coupling member, the handle pad being fixed to the handle core, and the handle sleeve being wrapped around the handle pad.

In one embodiment, the at least one aperture is circular in shape and has a diameter of substantially 1 mm to substantially 5mm.

In one embodiment, the distance between two adjacent apertures is substantially 2 mm to substantially 10 mm.

In one embodiment, the apertures are arranged 360 degrees around the food container.

In one embodiment, the feeding apparatus further includes a plurality of projections formed on the outer surface of the food container.

Although the feeding apparatus disclosed in the present application is shown and described with respect to certain embodiments, it is obvious that equivalents and modifications will occur to others skilled in the art upon the reading and understanding of the specification. The present application includes all such equivalents and modifications, and is limited only by the scope of the claims.

### BRIEF DESCRIPTION OF THE DRAWINGS

Specific embodiments of the feeding apparatus disclosed in the present application will now be described by way of example with reference to the accompanying drawings wherein:
FIG. 1 is an exploded view of a feeding apparatus, not in accordance with the current invention;
FIG. 2 is an exploded view of another feeding apparatus, not in accordance with the current invention;
FIG. 3 is an exploded view of another feeding apparatus, not in accordance with the current invention;
FIG. 4 is a perspective view of the feeding apparatus of FIG. 3;
FIG. 5 is a partially exploded view of another feeding apparatus, not in accordance with the current invention;
FIG. 6 is a perspective view of the feeding apparatus of FIG. 5;
FIG. 7 is a partially exploded view of another feeding apparatus, not in accordance with the current invention;
FIG. 7a is a top view of an annular projection, in accordance with the current invention;
FIG. 7b is a cross sectional view taken along line x-x of the annular projection in FIG. 7a;

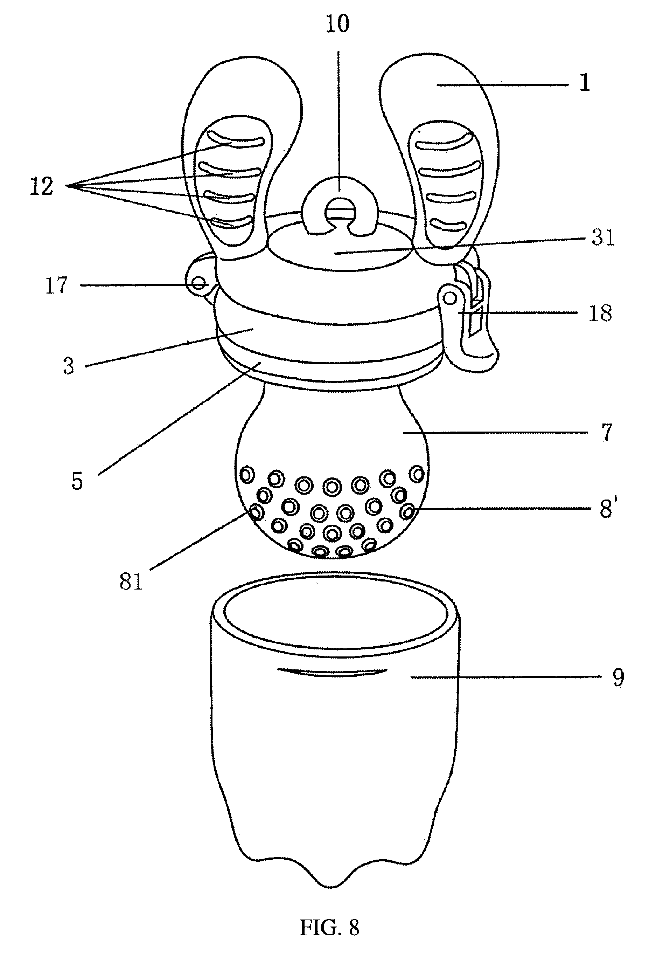

FIG. 8 is a perspective view of the feeding apparatus of FIG. 7;
FIG. 9 is a partially exploded view of another feeding apparatus, not in accordance with the current invention;
FIG. 10 is a perspective view of the feeding apparatus of FIG. 9;
FIG. 11 is a cross sectional view taken along line A-A of the feeding apparatus in FIG. 10;
FIG. 12 is a perspective view of another feeding apparatus, not in accordance with the current invention;
FIG. 13 is a perspective view of yet another feeding apparatus, not in accordance with the current invention;
FIG. 14 is a perspective view of a first embodiment of the feeding apparatus, in accordance with the current invention;
FIG. 15 is a perspective view of a second embodiment of the feeding apparatus, in accordance with the current invention;
FIG. 16 is a perspective view of a food container with apertures and projections, in accordance with the current invention;
FIG. 17 is a top plan view of a projection provided on the food container, in accordance with the current invention; and
FIG. 18 is a cross sectional view taken along line Y-Y of the projection in FIG. 17.

### DETAILED DESCRIPTION

Reference will now be made in detail to a preferred embodiment of the feeding apparatus disclosed in the present application, examples of which are also provided in the following description. Exemplary embodiments of the feeding apparatus disclosed in the present application are described in detail, although it will be apparent to those skilled in the relevant art that some features that are not particularly important to an understanding of the feeding apparatus may not be shown for the sake of clarity.

Furthermore, it should be understood that the feeding apparatus disclosed in the present application is not limited to the precise embodiments described below and that various changes and modifications thereof may be effected by one skilled in the art without departing from the spirit or scope of the appended claims. For example, elements and/or features of different illustrative embodiments may be combined with each other and/or substituted for each other within the scope of this disclosure and appended claims.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element, or is in mechanical or electrical communication with another element.

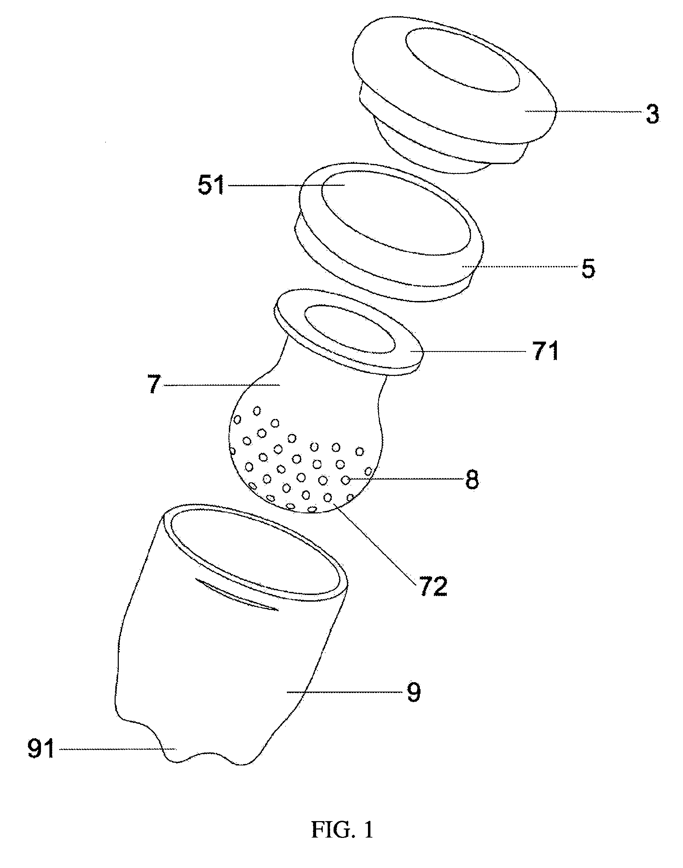

FIG. 1 is an exploded view of a feeding apparatus, not in accordance with the current invention. The apparatus includes a food container 7, a first coupling member 5, and a second coupling member 3. The food container 7 has an open end 71 and a closed end 72. The first coupling member 5 includes an opening 51. The food container 7 can be removably engaged with the first coupling member 5. When the food container 7 is coupled to the first coupling member 5, the open end 71 of the food container 7 is in communication with the opening 51 of the first coupling member 5. Food can be put into the food container 7 through the opening 51 of the first coupling member and the open end 71 of the food container 7. The second coupling member 3 can be cooperating with the first coupling member 5 and movable between an open configuration and a sealed configuration. In the open configuration, food can be put into the food container 7 through the opening 51 of the first coupling member 5 and the open end 71 of the food container 7. In the sealed configuration, the second coupling member 3 covers the opening 51 of the first coupling member 5 thereby sealing the open end 71 of the food container 7.

The food container 7 is provided with at least one aperture 8. According to the illustrated embodiment, the food container 7 has a plurality of apertures 8 arranged 360 degrees around the food container 7. The size and shape of the apertures 8 can be so designed that food coming out from the apertures 8 would not choke a person consuming the food. According to the illustrated embodiments, the apertures 8 are circular in shape and can have a diameter of substantially 1 mm to substantially 5 mm. The size, number and arrangement of the apertures 8 may vary according to different designs and requirements.

The food container 7 is made of a soft resilient material suitable for use with foodstuff. This soft resilient material for foodstuff use may include silicone or latex, or rubber or polyvinyl chloride (PVC) for foodstuff use. Silicone material is non-toxic, environmental-friendly, wear resistant, resistant to high and low temperatures, and aging resistant. Products made of silicone are more environmental-friendly, more safe and more durable. It is appreciated that the food container 7 can be made of a transparent soft resilient material allowing a person to readily see through the food container 7 and know whether the container 7 is full or empty.

Normally, the food container 7 stays in its original shape and the food stays inside the food container 7. When the food container 7 is put inside a person's mouth and a person chews, bites or sucks on the food container 7, the food container 7 collapses by the external force that forces the food (such as small pieces of crushed food, fruit puree, marc, juice, etc.) to seep and pass through the apertures 8. The food container 7 returns to its original shape upon release of the force due to the resiliency of the food container 7.

The food container 7 may be sized and shaped to hold small pieces of fruit or other food such as jelly, yogurt, vegetable, meat or fish, etc. The food container 7 can be put inside the mouth of a person for biting, sucking or chewing. For a fruit having juice and marc, fruit juice and small pieces of marc can be sucked through the apertures 8 and into a person's mouth, whilst larger pieces of marc remain inside the food container 7. Since the apertures 8 are smaller than the esophagus of a person eating the food, the person will not be choked by the food coming out from the apertures 8. This can protect the safety of the person eating food out of the feeding apparatus. For fruit having puree but without marc, the fruit puree can be dispensed through the apertures 8 and into the person's mouth. Therefore, one can use the feeding apparatus to feed an infant or baby with food such a fruit, and teach an infant or baby to chew and swallow without the risk of being choked by the fruit. The feeding apparatus is safe to an infant or baby and is convenient to use because it is not necessary for a caretaker to squeeze juice from the fruit before feeding. Using the feeding apparatus, an infant or baby can readily eat fresh fruit (such as strawberry, apple and pear), vegetable, fish, meat, etc.

When the food container 7 contains a mixture of food in solid state and liquid state, the liquid can form a sealing membrane over the apertures 8 under the influence of surface tension. Therefore, food inside the container 7 cannot be easily escaped through the apertures 8. An infant or baby needs to perform a suck action to suck the food through the apertures 8. This can train the muscles around the mouth as well as train the lung capacity of an infant or baby. Also, it can prevent leakage of liquid through the apertures 8 and spoilage of the clothing of the person eating the food out of the feeding apparatus. If the food container 7 is made of a mesh, the apertures on the mesh are not resilient and therefore it is difficult to form a sealing membrane over the apertures of the mesh. As the apertures on the mesh are close to each other, it becomes more difficult to form a sealing membrane over the mesh's apertures. The distance between two apertures 8 in the present application can be about 2 mm to about 10 mm.

As shown in FIG. 1, the first coupling member 5 and the second coupling member 3 can be coupled together. For example, the first coupling member 5 may be provided with an annular recess and the second coupling member 3 may be provided with an annular projection. A sealing configuration is formed when the annular projection is pressed into the annular recess. An open configuration is formed when the annular projection is pulled out from the annular recess. Of course, the first coupling member 5 and the second coupling member 3 can be coupled together by other suitable coupling mechanism such as screw threads.

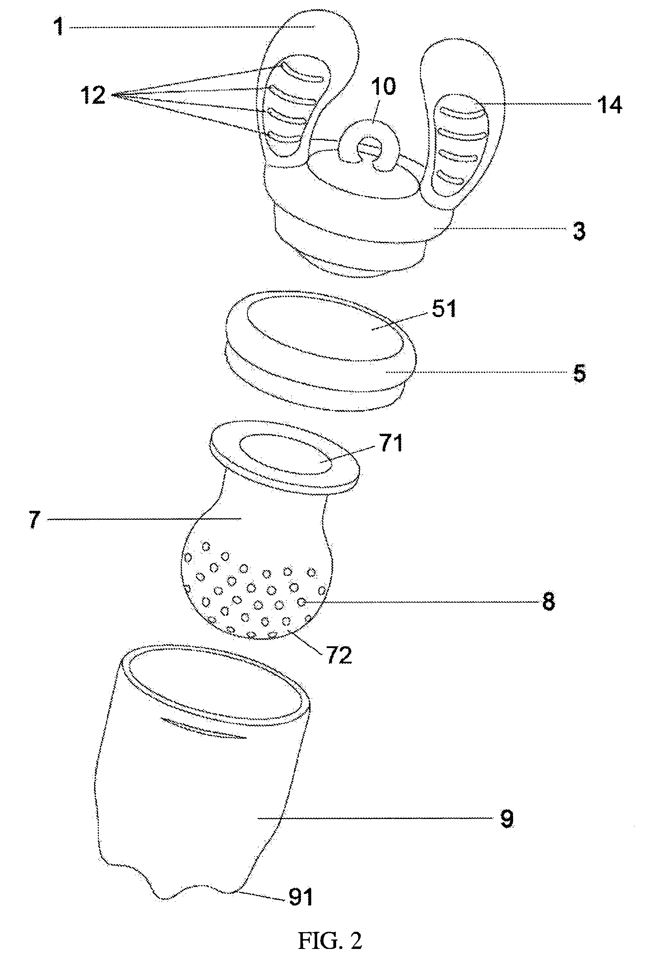

As shown in FIG. 2, the feeding apparatus, not in accordance with the current invention, may further be provided with a handle assembly 1 which is connected to the second coupling member 3. This facilitates the grasping of the feeding apparatus by a person eating the food. This can promote the training of the muscles of the hands of a person, especially for babies and patients, and can promote his or her hand, brain and mouth coordination. This feeding apparatus design can realize the food-eating initiative of an infant or baby.

The feeding apparatus may also include a cap 9 for covering the food container 7. The cap 9 serves to separate the food from the outer environment. The cap 9 can prevent any dust and dirt from contaminating the food while a person is not eating. The cap 9 may be removably attached to the first coupling member 5. As shown in the illustrated embodiment, the cap 9 can be attached to the first coupling member 5 by a simple snap-fitting mechanism. It is understood that the cap 9 may be attached to the first coupling member 5 by any other appropriate mechanism such as screw threads. The closed end of the cap 9 may be provided with a plurality of supporting elements 91. The supporting elements 91 allow the cap 9 to steadily stand on a flat surface such as a desk. To fill the food container 7 with food, one can attach the cap 9 to the first coupling member 5, and then place the cap 9 on a desk in a stand-up position by the supporting elements 9. This facilitates the filling of the food container 7 with food even with one hand. The cap 9 may also be transparent and allow one to see the food inside the food container 7.

As illustrated in FIG. 2, the feeding apparatus may be provided with a rope-attaching element 10 by which a rope can be tied. The rope-attaching element 10 may be generally in the form of a ring integrally formed on the second coupling member 3. The rope-attaching element 10 may be made of a hard plastic material or any other suitable material. A rope can be tied or threaded through the rope-attaching element 10 so that the feeding apparatus can be hung around a person. This prevents the feeding apparatus from accidentally dropping on the ground and contaminating the food.

The food container 7 may be formed into the shape of a nipple of a milk-feeding bottle. It serves as a pacifier to comfort an infant or baby and induces the infant or baby to eat the food. The closed end of the food container 7 may be formed into a shape substantially conforming to the shape of the mouth of an infant or baby. This facilitates the infant in holding the food container 7 inside the mouth, and sucking fruit juice, puree or marc out of the food container 7 without choking.

According to the illustrated embodiment, the open end 71 of the food container 7, the outer surfaces of the first coupling member 5 and the second coupling member 3 are generally circular in shape. This prevents the trapping of dirt on the feeding apparatus and facilitates cleaning of the feeding apparatus.

The feeding apparatus may also be provided with a fastening mechanism for fastening the first and second coupling members 5, 3 of the feeding apparatus in the sealed configuration. The fastening mechanism can strengthen the sealing between the first and second coupling members 5, 3, and prevent accidentally detaching the first coupling member 5 from the second coupling member 3 and therefore dropping the food.

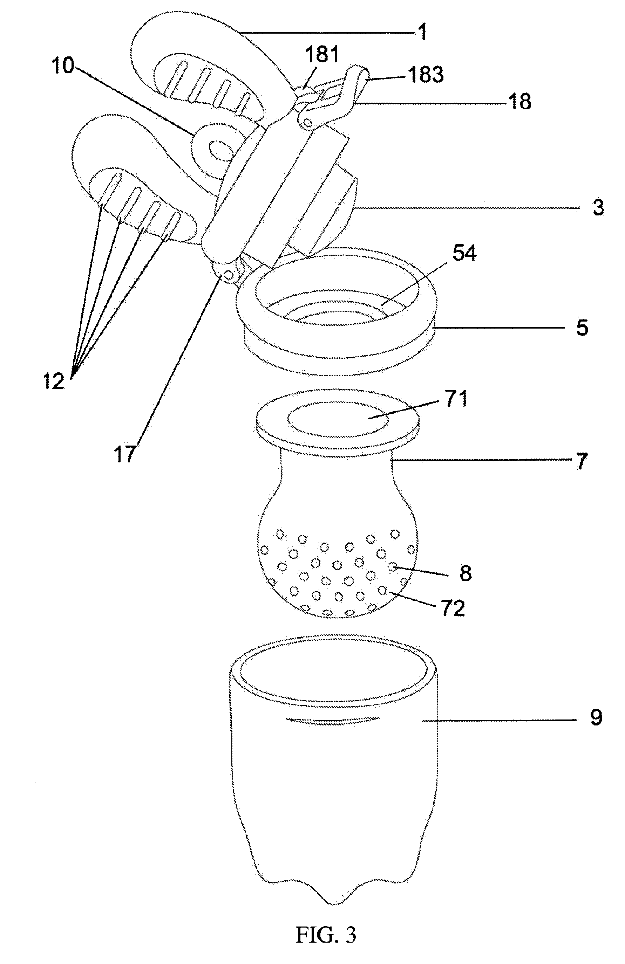

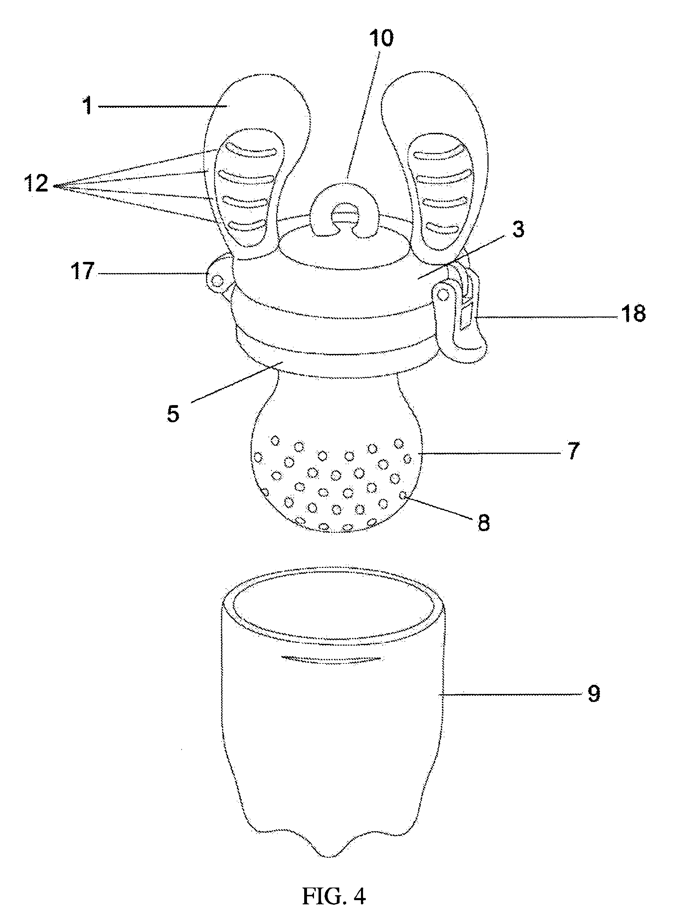

According to a feeding apparatus illustrated in FIGS. 3 and 4, not in accordance with the current invention, the fastening mechanism may include a hinge 17 and a fastener 18. One side of the first and second coupling members 5, 3 can be hingedly connected to each other by the hinge 17. The other side of the first and second coupling members 5, 3 can be secured together by the fastening 18. One end 181 of the fastener 18 can be movably connected to the second coupling member 3. The other end 183 of the fastener 18 may include a fastening hole for frictional engagement with a corresponding fastening projection integrally formed on the first coupling member 5. It is contemplated that the hinge 17 and the fastener 18 are simple in construction, and can make opening and closing of the first and second coupling members 5, 3 easy.

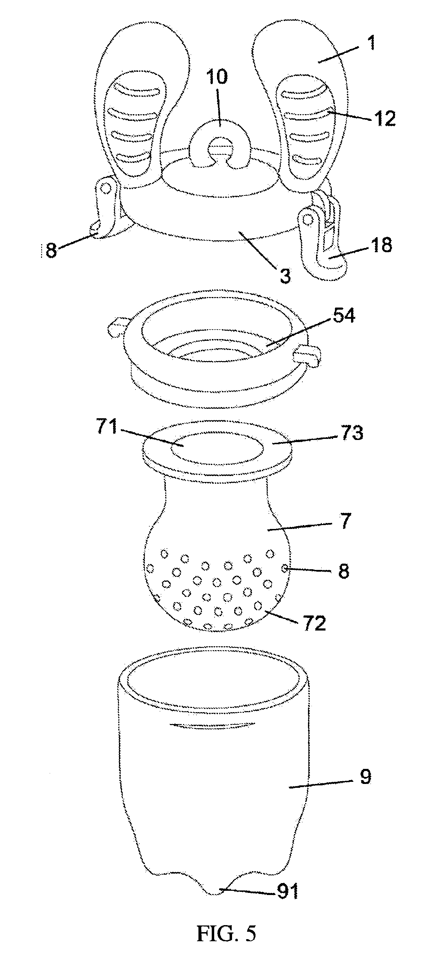

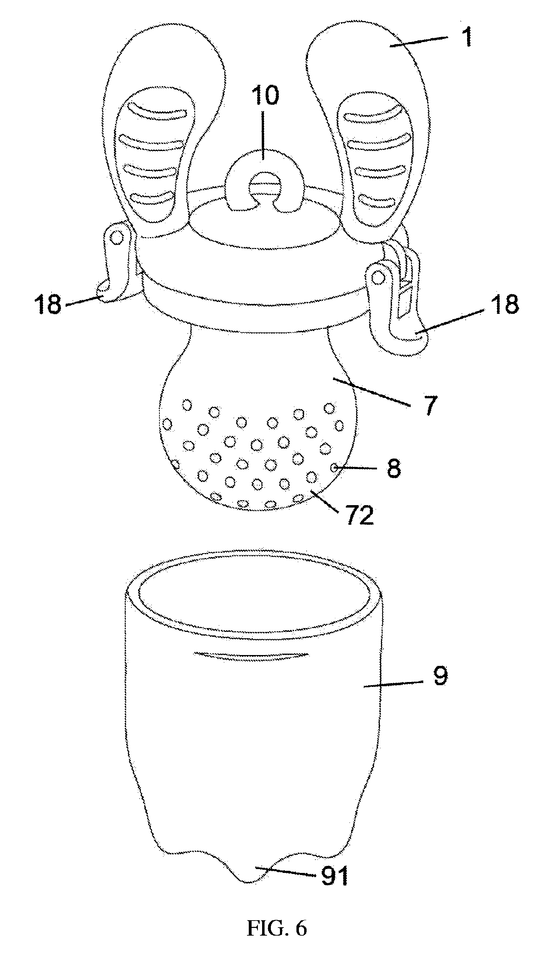

According to another feeding apparatus illustrated in FIGS. 5 and 6, not in accordance with the current invention, the fastening mechanism may include two fasteners 18, 18. The two sides of the first and second coupling members 5, 3 can be secured together by the two fasteners 18, 18 respectively.

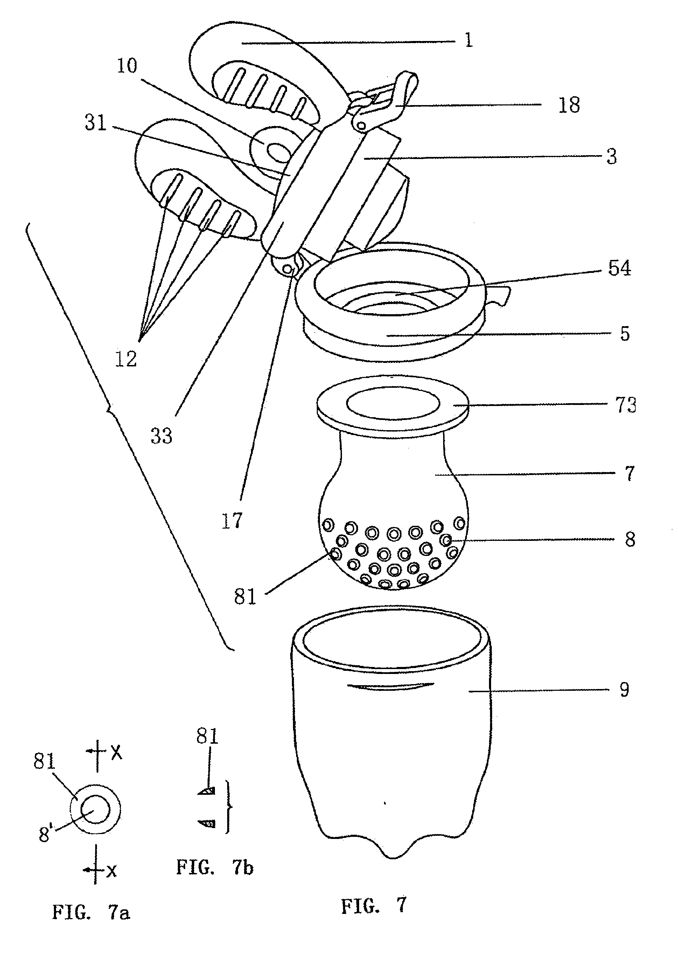

As depicted in FIGS. 7a and 7b, an annular protrusion 81, in accordance with the current invention, may be integrally formed on the outer surface around of the aperture 8'. The protrusion 81 can be used to massage the gum, relief discomfort during teething, benefit the growth and development of gum and teeth of an infant or baby. The protrusions 81 can also strengthen the gum and enhance chewing capability. One can put an infant or baby's favorite food inside the food container 7. Infant or baby would like to eat the food and have the gum massaged while eating the food. The feeding apparatus with protrusions 81 can therefore serve as a more effective teether compared to conventional tasteless teething apparatus.

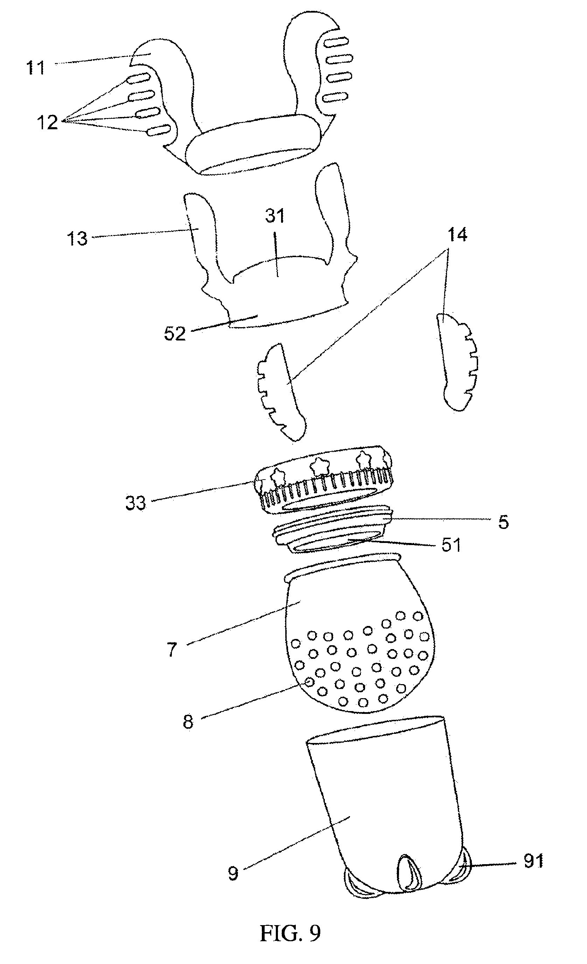

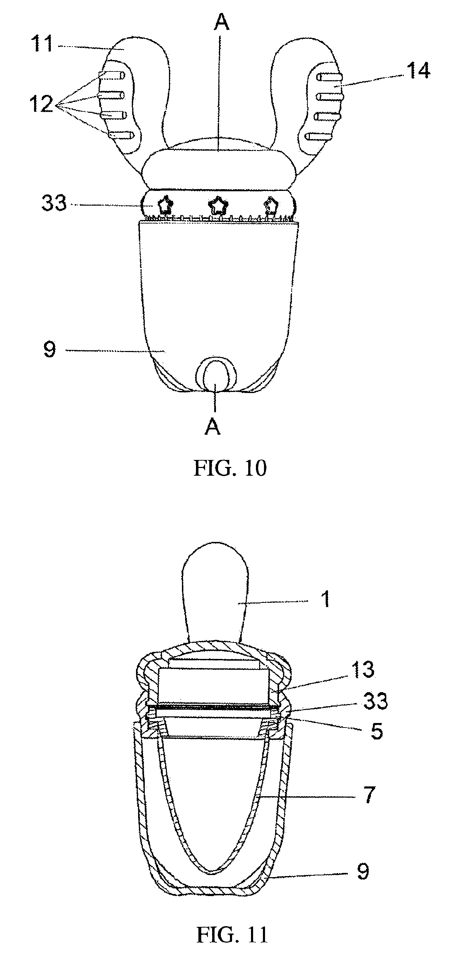

The feeding apparatus of the present application may include one handle assembly or two handle assemblies. Although the feeding apparatus shown in FIGS. 9 and 10 is not in accordance with the invention, the figures illustrate the handle assembly 1 including a handle core 13, a handle pad 14 and a handle sleeve 11. The handle core 13 can be attached to the second coupling member 3. The handle pad 14 can be fixed on the handle core 13 to provide anti-slip and appealing effects. According to the illustrated feeding apparatus, two handle pads 14 are attached to the front and the back of the handle core 13 respectively. Alternatively, the two handle pads 14 may be attached to the left side and the right side of the handle core 13 respectively. The handle sleeve 11 can be wrapped around the handle pad 14. The handle assembly 1 may further include a plurality of anti-slip strips 12. The strips 12 may be secured onto the handle pads 14 to further provide anti-slip and appealing effects. It is understood that the number of strips 12 on a handle pad 14 may vary depending on the different designs. The handle sleeve 11 and the strips 12 may be made of soft rubber or any other suitable material, which can facilitate the gripping of the handle assembly 1 and produce a comfort feeling to a person holding the handle assembly 1. The handle core 13 and the handle pad 14 may be made of hard plastic or any other suitable material.

As shown in FIGS. 9-11, the second coupling member 3 of another feeding apparatus, not in accordance with the current invention, may include an outer ring 33 and a cover 31 covering the top of the outer ring 33. The outer ring 33 and the cover 31 may be coupled together by relative rotation of a projection and recess mechanism. For example, the projection and recess mechanism may include an annular groove and an annular projection formed on the outer ring 33 and the cover 31 respectively. The outer ring 33 and the cover 31 may also be coupled together by screw threads. Alternatively, the outer ring 33 and the cover 31 may be integrally formed as one single piece. Two handle cores 13 may be attached to the two sides of the cover 31 respectively. Furthermore, the cap 9 can be coupled to the outer ring 33.

As shown in FIGS. 3 and 5, a radially outwardly extending annular flange 73 is provided at the open end 71 of the food container 7. In the sealed configuration, the annular flange 73 rests on a radially inwardly extending annular shoulder or platform 54 of the first coupling member 5, and can be clamped between the annular platform 54 and the second coupling member 3. In the open configuration, the annular flange 73 can be removed from the annular platform 54 of the first coupling member 5. This can make the assembling and cleaning of the feeding apparatus simple and easy. Since the food container 7 is made of a soft resilient material, the soft resilient annular flange 73 can have a sealing function and can strengthen the sealing between the first and the second coupling members 5, 3. This can further prevent the spilling of food while a person, especially a baby, is playing with the feeding apparatus while eating.

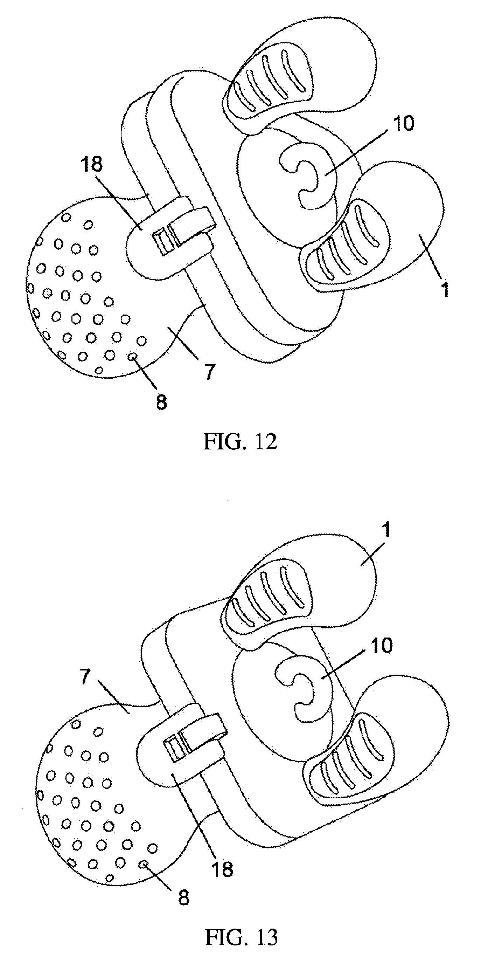

As shown in FIG. 12, not in accordance with the current invention, the open end 71 of the food container 7 and the first coupling member 5 can be generally triangular in shape. Each of the three acute angles can be rounded. As shown in FIG. 13, not in accordance with the current invention, the open end 71 of the food container 7 and the first coupling member 5 can be generally rectangular in shape. Each of the angles can be rounded. These two feeding apparatus designs do not have unhygienic dead comers that would cause hygiene problem and are therefore easy to clean.

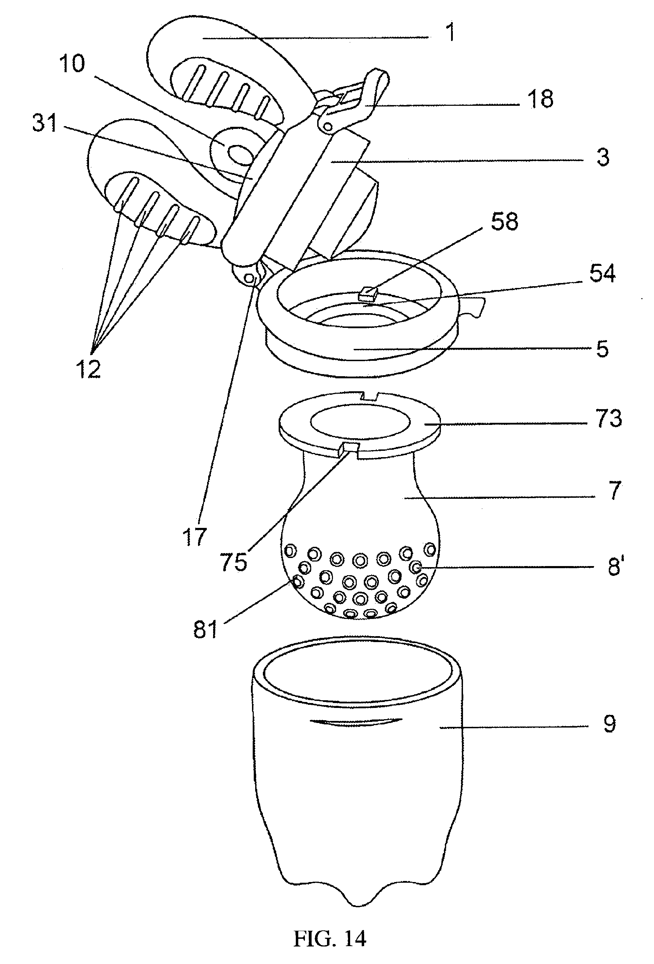

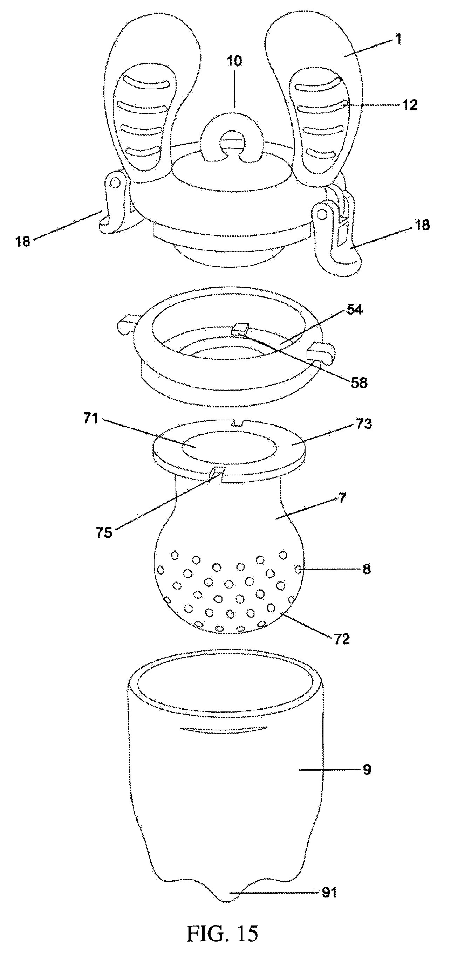

In the two embodiments of the feeding apparatus as depicted in FIGS. 14 and 15, in accordance with the current invention, the position of the annular flange 73 and the annular platform 54 can be fixed by position-fixing mechanism thereby allowing a person to hold the handle by a hand in a horizontal position while the food container 7 is in the mouth. This allows the person to hold the handle comfortably while eating. According to the illustrated embodiments, the position-fixing mechanism includes a notch 75 provided on the annular flange 73 and a corresponding projection 58 provided on the annular platform 54. Of course, it is appreciated that a notch can be formed on the annular platform 54 and a corresponding projection can be formed on the annular flange 73 instead.

Although it has been shown and described that the annular protrusions 81 are formed around the apertures 8', it is understood by one skilled in the art that further protrusions can be formed elsewhere on the outer surface of the food container 7.

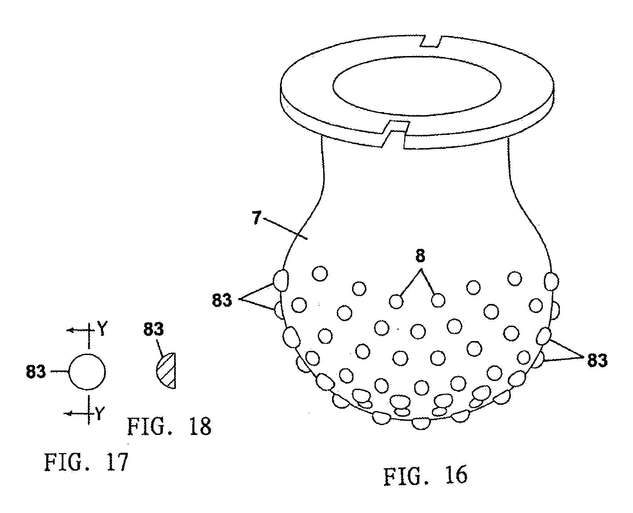

FIG. 16 shows a food container 7, in accordance with the current invention, having a plurality of apertures 8 formed around the food container 7 and a plurality of protrusions 83 integrally formed at the closed end of the food container 7. The apertures 8 are used for dispensing food and the protrusions 83 are used for massaging the gum of a baby or infant. According to the illustrated embodiment as shown in FIGS. 17 and 18, in accordance with the current invention, the protrusions 83 are in the shape of a semicircle. It is understood that the shape, size, and arrangement of these protrusions 83 on the food container 7 may vary depending on different designs.

Although it has been shown and described that the apertures 8 and 8' are circular in shape, it is understood that the apertures 8 and 8' may in any other appropriate shapes.

While the feeding apparatus disclosed in the present application has been shown and described with particular references to a number of preferred embodiments thereof, it should be noted that various other changes or modifications may be made without departing from the scope of the appending claims.

## Claims

1. A feeding apparatus comprising:
A separate food container (7) comprising an open end (71), a closed end (72), an annular flange (73) at the open end (71), and a plurality of apertures (8) at least adjacent to the closed end;
a first coupling member (5) comprising an opening (51) in communication with the container open end (71), the food container (7) being engagable with the first coupling member (5); and
a second coupling member (3) which is separate of the food container (7), and which is cooperable with the first coupling member (5) to be movable between an open configuration allowing food to pass through the opening (51) of the first coupling member (5) and into the food container (7), and a sealed configuration where the second coupling member covers and closes the opening (51) of the first coupling member (5) thereby sealing the open end (71) of the food container (7);
wherein the food container (7) is made of a soft resilient material and is deformable between an original shape having a first volume and a deformed shape having a second volume, wherein food is forcible through the apertures (8) when the food container (7) is deformed by an external force, and when the external force is removed, the food container (7) returns to its original shape; **characterised by**
a position fixing mechanism having a notch (75) at one of the edge of the annular flange (73) of the food container (7) and the first coupling member (5), and a projection (58) at the other of the edge of the annular flange of the food container (7) and the first coupling member (5), the notch (75) and projection (58) fixing a position of the separate food container (7) when the annular flange (73) is clamped between the annular platform (54) of the first coupling member (5) and the second coupling member (3).

2. The feeding apparatus as claimed in claim 1, wherein the soft resilient material comprises silicone, latex or rubber suitable for use with foodstuff.

3. The feeding apparatus as claimed in claim 1, wherein the food container (7) comprises a plurality of protrusions (81), each protrusion (81) being positioned around each aperture on an outer surface of the food container (7).

4. The feeding apparatus as claimed in claim 3, wherein the outer surface of the protrusion (81) is generally in the shape of a truncated dome.

5. The feeding apparatus as claimed in claim 1, further comprising at least one fastening mechanism for fastening the first and second coupling members together while in the sealed configuration.

6. The feeding apparatus as claimed in claim 1, wherein the first and second coupling members are fastened together by screw threads or fasteners.

7. The feeding apparatus as claimed in claim 1, wherein the first and second coupling members are hingedly connected together at one side and fastened together at the other side.

8. The feeding apparatus as claimed in claim 1, wherein the first and second coupling members are fastened together at two sides thereof by two fasteners respectively.

9. The feeding apparatus as claimed in claim 1, wherein the open end (71) of the food container (7), the outer surfaces of the first and second coupling members are generally circular in shape.

10. The feeding apparatus as claimed in claim 1, wherein the food container (7) is generally in the shape of a nipple of a milk-feeding bottle.

11. The feeding apparatus as claimed in claim 1, further comprising a cap (9) for covering the food container, the cap (9) is attached to the first coupling member and the cap (9) is provided with a plurality of supporting elements (91).

12. The feeding apparatus as claimed in claim 1, wherein the annular flange (73) of the food container (7) is adapted to be clamped between an annular platform (54) of the first coupling member and the second coupling member while in the sealed configuration.

13. The feeding apparatus as claimed in claim 1, wherein the apertures (8) are circular in shape and have a diameter of substantially 1 mm to substantially 5 mm.

14. The feeding apparatus as claimed in claim 1, wherein the distance between two adjacent apertures (8) is substantially 2 mm to substantially 10 mm.

## Patentansprüche

1. Zufuhrvorrichtung, umfassend:
einen getrennten Nahrungsmittelbehälter (7), umfassend ein offenes Ende (71), ein geschlossenes Ende (72), einen ringförmigen Flansch (73) am offenen Ende (71), und eine Vielzahl von Öffnungen (8), die dem geschlossenen Ende mindestens benachbart sind,
ein erstes Kopplungselement (5), das eine Öffnung (51) umfasst, die mit dem offenen Ende des Behälters (71) in Kommunikation steht, wobei der Nahrungsmittelbehälter (7) mit dem ersten Kopplungselement (5) eingegriffen werden kann; und
ein zweites Kopplungselement (3), das getrennt vom Nahrungsmittelbehälter (7) ist, und das mit dem ersten Kopplungselement (5) kombinierbar ist, um zwischen einer offenen Konfiguration, die ermöglicht, dass Nahrungsmittel durch die Öffnung (51) des ersten Kopplungselementes (5) und in den Nahrungsmittelbehälter (7) passieren, und einer abgedichteten Konfigurationen beweglich zu sein, in der das zweite Kopplungselement die Öffnung (51) des ersten Kopplungselemente (5) abdeckt und verschließt, wodurch das offene Ende (71) des Lebensmittelbehälters (7) abgedichtet wird.
wobei der Lebensmittelbehälter (7) aus einem weichen elastischen Material hergestellt ist und zwischen einer ursprünglichen Form mit einem ersten Volumen und einer verformten Form mit einem zweiten Volumen verformbar ist, wobei Nahrungsmittel durch die Öffnungen (8) gepresst werden können, wenn der Nahrungsmittelbehälter (7) durch eine äußere Kraft verformt wird, und wenn die äußere Kraft entfernt wird, der Lebensmittelbehälter (7) in seine ursprüngliche Form zurückkehrt; **gekennzeichnet durch**
einen Positionsfixierungsmechanismus mit einer Kerbe (75) an einer der Kanten des ringförmigen Flanschens (73) des Nahrungsmittelbehälters (7) und des ersten Kopplungselements (5), und einen Vorsprung (58) an der anderen Kante des ringförmigen Flanschens des Nahrungsmittelbehälters (7) und des ersten Kopplungselements (5), wobei die Kerbe (75) und der Vorsprung (58) eine Position des getrennten Lebensmittelbehälters (7) fixieren, wenn der ringförmige Flansch (73) zwischen die ringförmige Plattform (54) des ersten Kopplungselements (5) und des zweiten Kopplungselements (3) geklemmt wird.

2. Zufuhrvorrichtung nach Anspruch 1, wobei das weiche elastische Material Silikon, Latex und Gummi umfasst, die geeignet für die Verwendung mit Lebensmitteln sind.

3. Zufuhrvorrichtung nach Anspruch 1, wobei der Lebensmittelbehälter (7) eine Vielzahl von Vorwölbungen (81) umfasst, wobei jede Vorwölbung (81) um jede Öffnung auf einer Außenfläche des Lebensmittelbehälters (7) positioniert ist.

4. Zufuhrvorrichtung nach Anspruch 3, wobei die Außenfläche der Vorwölbung (81) im Allgemeinen die Form einer kegelstumpfförmigen Kuppel aufweist.

5. Zufuhrvorrichtung nach Anspruch 1, weiter umfassend mindestens einen Befestigungsmechanismus, um das erste und das zweite Kopplungselement aneinander zu befestigten, während sie sich in der abgedichteten Konfiguration befinden.

6. Zufuhrvorrichtung nach Anspruch 1, wobei das erste und das zweite Kopplungselement durch Schraubengewinde oder Befestigungen aneinander befestigt sind.

7. Zufuhrvorrichtung nach Anspruch 1, wobei das erste und das zweite Kopplungselement an der einen Seite gelenkig miteinander verbunden und an der anderen Seite aneinander befestigt sind.

8. Zufuhrvorrichtung nach Anspruch 1, wobei das erste und das zweite Kopplungselement an zwei Seiten davon von jeweils zwei Befestigungsvorrichtungen befestigt sind.

9. Zufuhrvorrichtung nach Anspruch 1, wobei das offene Ende (71) des Lebensmittelbehälters (7), die Außenflächen des ersten und des zweiten Kopplungselements im Allgemeinen ringförmig sind.

10. Zufuhrvorrichtung nach Anspruch 1, wobei der Lebensmittelbehälter (7) im Allgemeinen die Form eines Saugers einer Milch-Fütterflasche aufweist.

11. Zufuhrvorrichtung nach Anspruch 1, weiter umfassend eine Kappe (9), um den Nahrungsmittelbehälter abzudecken, wobei die Kappe (9) an das erste Kopplungselement befestigt ist und die Kappe (9) mit einer Vielzahl von Stützelementen (91) ausgestattet ist.

12. Zufuhrvorrichtung nach Anspruch 1, wobei der ringförmige Flansch (73) des Lebensmittelbehälters (7) ausgelegt ist, um zwischen eine ringförmige Plattform (54) des ersten Kopplungselements und des zweiten Kopplungselements geklemmt zu werden, während es sich in der abgedichteten Konfiguration befindet.

13. Zufuhrvorrichtung nach Anspruch 1, wobei die Öffnungen (8) ringförmig sind und einen Durchmesser von im Wesentlichen 1 mm bis im Wesentlichen 5 mm aufweisen.

14. Zufuhrvorrichtung nach Anspruch 1, wobei der Abstand zwischen zwei benachbarten Öffnungen (8) im Wesentlichen 2 mm bis im Wesentlichen 10 mm beträgt.

## Revendications

1. Appareil d'alimentation comprenant :
- un récipient pour nourriture (7) séparé comprenant une extrémité ouverte (71), une extrémité fermée (72), une bride annulaire (73) à l'extrémité ouverte (71) et une pluralité d'ouvertures (8) au moins adjacentes à l'extrémité fermée ;
- un premier élément d'accouplement (5) comprenant une ouverture (51) en communication avec l'extrémité ouverte (71) du récipient, le récipient pour nourriture (7) étant apte à être engagé avec le premier élément d'accouplement (5) ; et
- un second élément d'accouplement (3) qui est séparé du récipient pour nourriture (7) et qui est apte à coopérer avec le premier élément d'accouplement (5) pour être mobile entre une configuration ouverte autorisant la nourriture à passer à travers l'ouverture (51) du premier élément d'accouplement (5) et dans le récipient pour nourriture (7), et une configuration scellée de manière étanche dans laquelle le second élément d'accouplement recouvre et ferme l'ouverture (51) du premier élément d'accouplement (5), scellant ainsi de manière étanche l'extrémité ouverte (71) du récipient pour nourriture (7) ;
- le récipient pour nourriture (7) étant fait d'un matériau élastique souple et étant déformable entre une forme d'origine ayant un premier volume et une forme déformée ayant un second volume, l'aliment étant forcé à travers les ouvertures (8) lorsque le récipient pour nourriture (7) est déformé par une force externe et le récipient pour nourriture (7) retournant à sa forme d'origine lorsque la force externe est relâchée ; **caractérisé par**
- un mécanisme de fixation de position ayant une encoche (75) à un bord de la bride annulaire (73) du récipient pour nourriture (7) et du premier élément d'accouplement (5), et une saillie (58) à l'autre bord de la bride annulaire du récipient pour nourriture (7) et du premier élément d'accouplement (5), l'encoche (75) et la saillie (58) fixant une position du récipient pour nourriture (7) séparé lorsque la bride annulaire (73) est serrée entre la plate-forme annulaire (54) du premier élément d'accouplement (5) et le second élément d'accouplement (3).

2. Appareil d'alimentation selon la revendication 1, dans lequel le matériau élastique souple comprend du silicone, du latex ou du caoutchouc approprié pour être utilisé avec des aliments.

3. Appareil d'alimentation selon la revendication 1, dans lequel le récipient pour nourriture (7) comprend une pluralité de protubérances (81), chaque protubérance (81) étant positionnée autour de chaque ouverture sur une surface extérieure du récipient pour nourriture (7).

4. Appareil d'alimentation selon la revendication 3, dans lequel la surface extérieure de la protubérance (81) a de manière générale la forme d'un dôme tronqué.

5. Appareil d'alimentation selon la revendication 1, comprenant en outre au moins un mécanisme d'attache pour attacher les premier et second éléments d'accouplement ensemble alors qu'ils sont dans la configuration scellée de manière étanche.

6. Appareil d'alimentation selon la revendication 1, dans lequel les premier et second éléments d'accouplement sont attachés ensemble par des filetages ou des attaches.

7. Appareil d'alimentation selon la revendication 1, dans lequel les premier et second éléments d'accouplement sont reliés ensemble par charnière à un premier côté et attachés ensemble à l'autre côté.

8. Appareil d'alimentation selon la revendication 1, dans lequel les premier et second éléments d'accouplement sont attachés ensemble à deux côtés de ceux-ci par deux attaches, respectivement.

9. Appareil d'alimentation selon la revendication 1, dans lequel l'extrémité ouverte (71) du récipient pour nourriture (7), les surfaces extérieures des premier et second éléments d'accouplement ont de manière générale une forme circulaire.

10. Appareil d'alimentation selon la revendication 1, dans lequel le récipient pour nourriture (7) a de manière générale la forme d'une tétine d'un biberon.

11. Appareil d'alimentation selon la revendication 1, comprenant en outre un capuchon (9) pour recouvrir le récipient pour nourriture, le capuchon (9) est attaché au premier élément d'accouplement et le capuchon (9) comporte une pluralité d'éléments de support (91).

12. Appareil d'alimentation selon la revendication 1, dans lequel la bride annulaire (73) du récipient pour nourriture (7) est apte à être serrée entre une plate-forme annulaire (54) du premier élément d'accouplement et le second élément d'accouplement alors qu'ils sont dans la configuration scellée de manière étanche.

13. Appareil d'alimentation selon la revendication 1, dans lequel les ouvertures (8) ont une forme circulaire et ont un diamètre de sensiblement 1 mm à sensiblement 5 mm.

14. Appareil d'alimentation selon la revendication 1, dans lequel la distance entre deux ouvertures (8) adjacentes est de sensiblement 2 mm à sensiblement 10 mm.
